# EUROPEAN PATENT APPLICATION

(11) **EP 4 398 016 A1**
(43) Date of publication of application: **10.07.2024**
(21) Application number: 22877772.8
(22) Date of filing: 10.05.2022
(51) Int. Cl.: G02B 6/44, G02B 6/36, G02B 6/38

(54) **CONNECTION BOX**

(30) Priority: 09.10.2021 CN 202111178189
(71) Applicant: Huawei Technologies Co., Ltd., Shenzhen, Guangdong 518129 (CN)
(72) Inventor: MA, Zhigang, Shenzhen, Guangdong 518129 (CN); CHENG, Jian, Shenzhen, Guangdong 518129 (CN); HE, Boyong, Shenzhen, Guangdong 518129 (CN)
(74) Representative: Körber, Martin Hans
(86) International application number: PCT/CN2022/091876
(87) International publication number: WO 2023/056746

(57) **Abstract**

Embodiments of this application provide a closure, including a housing and an adapter element. The adapter element includes a tube and a first connection part and a second connection part that communicate with each other inside, the first connection part is located inside the housing, the second connection part is located outside the housing, one end of the tube is located in the first connection part, and the other end of the tube is located in the second connection part. The first connection part is configured to connect to a first connector disposed in the housing, and the second connection part is configured to connect to a second connector outside the housing. In addition, the housing, the first connection part, and the second connection part are of an integral structure as a whole. According to the closure provided in embodiments of this application, a product structure can be simplified, and material costs and assembling costs can be greatly reduced. In addition, product reliability problems caused by assembling an adapter can be avoided.

## Description

This application claims priority to Chinese Patent Application No. 202111178189.X, filed with the China National Intellectual Property Administration on Oct 9, 2021 and entitled " Closure", which is incorporated herein by reference in its entirety.

### TECHNICAL FIELD

Embodiments of this application relate to the field of communications connection technologies, and in particular, to a closure.

### BACKGROUND

An optical distribution network (Optical Distribution Network, ODN) is a network including all passive fibers and passive devices (for example, optical splitters) between an optical line terminal (Optical Line Terminal, OLT) and an optical network unit (Optical Network Unit, ONU). The ODN connects one OLT device to a plurality of ONU devices to provide bidirectional transmission of optical signals. In an ODN project, closures (for example, an optical fiber distribution terminal box, an optical distribution box, and an optical fiber division box) are used, and different quantities of passive optical components of different types are integrated into these closures, to meet requirements of fiber deployment and management.

As competition in the ODN industry becomes increasingly fierce, costs of closure products have become one of important issues. The market has an unprecedented demand for closure products with high reliability and low costs. In a related technology, the closure includes an adapter, and two connectors are positioned in a sleeve in the adapter to implement an interconnection of two fibers.

However, the closure usually has a relatively large casing, and has a low dimensional precision requirement, but the adapter has a high dimensional precision requirement, and the adapter usually uses a polymer material with high dimensional stability and good weather resistance. Therefore, the adapter is produced separately from the closure, and then the adapter is assembled onto the closure. However, assembling costs in this manner are high, and poor installation of the adapter may cause the adapter to fall off, cause a sealing failure, or the like, seriously affecting product reliability.

### SUMMARY

Embodiments of this application provide a closure to simplify a product structure and resolve a high-cost problem. In addition, the closure can further avoid reliability problems caused by quality of an assembled adapter.

To achieve the foregoing objective, an embodiment of this application provides a closure, including a housing and an adapter element. The adapter element includes a tube and a first connection part and a second connection part that communicate with each other inside, the first connection part is located inside the housing, the second connection part is located outside the housing, one end of the tube is located in the first connection part, and the other end of the tube is located in the second connection part.

The first connection part is configured to connect to a first connector disposed in the housing, and the second connection part is configured to connect to a second connector outside the housing.

In addition, the housing, the first connection part, and the second connection part are of an integral structure as a whole.

According to the closure provided in this embodiment of this application, two fibers are connected by using the adapter element integrally formed with the housing, to form an entire optical distribution network, and no adapter needs to be separately assembled, so that a product structure can be simplified, and material costs and assembling costs can be greatly reduced. In addition, the closure provided in this embodiment of this application is free from an adapter and O-rings at junctions between the adapter and an inner side and an outer side of an adapter panel, to avoid product reliability problems caused by assembling the adapter. In addition, in comparison with an adapter that is separately produced and assembled and that uses a polymer material with a relatively high price due to a requirement for dimensional stability, in the closure provided in this embodiment of this application, PPT plastic materials with lower prices may be used for the adapter element and the housing as an integral structure, so that material costs are further reduced.

In a possible implementation, an engagement part is disposed inside the first connection part, a slot fitting with the engagement part is disposed on the first connector, and the first connector and the first connection part are plug-connected through engagement of the engagement part and the slot. In this way, the first connection part and the first connector can be plug-connected through engagement of the engagement part and the slot, to implement plug-and-play of the first connector.

In a possible implementation, the adapter element further includes a tube and a fastening sleeve, one end of the fastening sleeve is located in the first connection part, and the other end of the fastening sleeve is located in the second connection part. The tube is disposed in the fastening sleeve, and limiting structures for limiting the tube are disposed at both ends of the fastening sleeve. In this way, the tube is disposed in the fastening sleeve, and a ferrule of the first connector and a ferrule of the second connector can be accurately interconnected in the tube, and optical transmission stability of the ferrule of the first connector and the ferrule of the second connector in the tube can be ensured. In addition, the limiting structures for limiting the tube are further disposed at both ends of the fastening sleeve to limit displacement of the tube in an axial direction of the fastening sleeve, thereby ensuing interconnection stability of the ferrule of the first connector and the ferrule of the second connector in the tube.

In a possible implementation, an outer edge of an end that is of the fastening sleeve and that is located in the first connection part may be misaligned with the engagement part in the axial direction of the fastening sleeve, and a gap is provided on the engagement part. The gap is provided on the engagement part to avoid affecting product molding and a service life of a mold because of a thin wall structure of the mold at the engagement part during injection molding.

In a possible implementation, a fastening bracket is disposed in the adapter element, and the fastening sleeve is fastened in the adapter element by using the fastening bracket. An avoidance port is disposed on the fastening bracket at a position opposite to each engagement part, and an area of an opening of the avoidance port is greater than an orthographic projection area of the engagement part on the fastening bracket. The avoidance port is separately connected to an inside of the first connection part and an inside of the second connection part, so that a pull-out channel is formed inside the adapter element.

The fastening sleeve can be fastened in the adapter element by using the fastening bracket. The avoidance port is disposed on the fastening bracket at the position opposite to each engagement part, and the area of the opening of the avoidance port is greater than the orthographic projection area of the engagement part on the fastening bracket. The avoidance port is separately connected to the inside of the first connection part and the inside of the second connection part, so that the pull-out channel is formed inside the adapter element. If viewed from an axial direction of the adapter element, a complete engagement part can be viewed in the pull-out channel. The pull-out channel may be used as a channel through which the mold is removed when the engagement part is molded. When being removed, the mold exits the second connection part. Without the pull-out channel, structural molding of the engagement part becomes quite complex, or the engagement part cannot be integrally formed with the housing.

In a possible implementation, a first annular groove is provided on an outer peripheral wall of the second connection part, and a first O-ring is disposed in the first annular groove. A tangent plane is disposed on the outer peripheral wall of the second connection part on a side that is of the first annular groove and that is close to the housing.

The first O-ring can avoid damage to an element in the closure that occurs when an impurity such as liquid enters the closure from a gap between the outer peripheral wall of the second connection part and a dust-proof cover or an inner wall of a sleeve of the second connector.

In a possible implementation, a boss is disposed on the tangent plane. Disposing the boss on the tangent plane can prevent the dust-proof cover or the second connector from extruding the first O-ring out of the first annular groove from the tangent plane when the dust-proof cover or the second connector is connected to the second connection part.

In a possible implementation, the closure further includes the dust-proof cover, and the dust-proof cover is configured to be detachably disposed on the second connection part when the second connection part is not connected to the second connector
A second annular groove is provided on an end that is of the second connection part and that is close to the housing, so that the dust-proof cover is hung on the second annular groove when the second connection part is connected to the second connector
A circular step exists between the first annular groove and the second annular groove, and two tangent planes that are axially symmetrical with respect to a center axis of the second connection part are disposed on an outer peripheral surface of the circular step.

When the closure is not in use, disposing the dust-proof cover can avoid dust accumulation and damage to an element in the closure that occur when impurities such as dust and liquid enter the closure. In addition, the second annular groove is provided on the end that is of the second connection part and that is close to the housing, so that when the second connection part is connected to the second connector, the dust-proof cover is hung on the second annular groove, thereby ensuring that the dust-proof cover is not easily lost. In addition, the tangent planes are disposed on the outer peripheral surface of the circular step. When the second connection part is molded, an end of an upper mold and an end of a lower mold are changed from tip-to-tip fitting to face-to-face fitting, and thicknesses of the end of the upper mold and the end of the lower mold are relatively large. Therefore, in a use process, the end of the upper mold and the end of the lower mold are not easily deformed or damaged, to facilitate mold removal after injection molding, thereby ensuring that the second connection part is integrally formed at the circular step.

In a possible implementation, the tube is a ceramic tube, and an opening is opened on the tube in an axial direction of the tube, so that the tube is of an open-loop annular structure. In this way, the tube can have specific elasticity, to adapt to a plurality of operating conditions in which diameters of the ferrule of the first connector and the ferrule of the second connector are inconsistent because of processes, models, and the like.

In a possible implementation, the housing includes a casing and an adapter panel, the casing is connected to the adapter panel, and inner surfaces of the casing and the adapter panel form an accommodation cavity; and
the first connection part, the second connection part, and the casing are of an integral structure; or
the first connection part, the second connection part, and the adapter panel are of an integral structure.

In a possible implementation, a second O-ring is disposed between the casing and the adapter panel.

The second O-ring is configured to seal a connection between the casing and the adapter panel, so that the accommodation cavity is a closed cavity body. The second O-ring seals the connection between the casing and the adapter panel, so that the accommodation cavity formed by the adapter panel and the casing is a closed cavity body, to avoid dust accumulation in the accommodation cavity and damage to an element in the accommodation cavity that occur when impurities such as dust and water stains enter the accommodation cavity.

In a possible implementation, a hook is disposed on the adapter panel, an engagement position to be engaged with the hook is disposed on the casing, and the casing and the adapter panel are engaged through engagement of the hook and the engagement position.

In a possible implementation, a rotation buckle is disposed on the outer peripheral wall of the second connection part, and protrusions fitting with the rotation buckle are disposed on the dust-proof cover and the second connector. The second connection part is engaged with the dust-proof cover or the second connector through fitting of the rotation buckle with the protrusion. The second connection part can be connected to the second connector by using the rotation buckle and a protrusion on the second connector.

In a possible implementation, the rotation buckle includes a longitudinal groove and an arc-shaped groove, one end of the longitudinal groove is connected to an outer end face of the second connection part, the other end of the longitudinal groove is connected to the arc-shaped groove, and the arc-shaped groove is disposed along a circumference of the outer peripheral wall of the second connection part, so that the longitudinal groove and the arc-shaped groove constitute an "L"-shaped groove.

When the second connector is engaged with the second connection part, the protrusion on the second connector enters the longitudinal groove from the outer end face of the second connection part, and then the second connector is rotated, so that the protrusion enters the arc-shaped groove from the longitudinal groove, thereby implementing engagement of the second connector and the second connection part and preventing the second connector from falling off from the housing.

In a possible implementation, the closure further includes an optical splitter disposed in the housing, and the optical splitter may be used for optical signal coupling, branching, and distribution.

The optical splitter is connected to the first connection part by using the first connector.

In a possible implementation, the closure further includes a fiber tray, and the fiber tray is located in the housing. The fiber tray may be configured to fasten and protect a fiber connector. Because a tensile force, a bending force, and pressure impose great impact on installation and application of a fiber, the fiber tray can provide safe cabling and easy-to-manage environments for the fragile fiber connector.

In a possible implementation, there are a plurality of adapter elements, second connection parts of some of the plurality of adapter elements are input interfaces, and second connection parts of some of the plurality of adapter elements are output interfaces. In this way, an optical distribution network system can be formed by using the closure including a plurality of input interfaces and a plurality of output interfaces.

### BRIEF DESCRIPTION OF DRAWINGS

FIG. 1 is a schematic diagram of a box-type device used as a connection in a related technology;
FIG. 2 is a schematic diagram of a structure of a closure according to an embodiment of this application;
FIG. 3 is a schematic diagram of an exploded structure of the closure provided in FIG. 2;
FIG. 4 is a schematic diagram of a cross-sectional structure of an adapter panel of the closure provided in FIG. 3;
FIG. 5A is an enlarged schematic diagram of a cross-sectional structure of an adapter element in the adapter panel provided in FIG. 4;
FIG. 5B is a partial cross-sectional schematic diagram in which a fastening sleeve, an engagement part, and a mold fit with each other;
FIG. 5C is a schematic top view from a direction shown in FIG. 5B when a fastening sleeve, an engagement part, and a mold fit with each other;
FIG. 5D is a schematic top view from a direction shown in FIG. 5B when a fastening sleeve, an engagement part, and a mold fit with each other according to an embodiment of this application;
FIG. 6 is a schematic diagram of a structure of a tube according to an embodiment of this application;
FIG. 7 is a perspective view of an adapter panel of a closure according to an embodiment of this application;
FIG. 8 is an enlarged schematic diagram of an adapter element in the adapter panel provided in FIG. 7;
FIG. 9 is a perspective view of an adapter panel of a closure according to an embodiment of this application;
FIG. 10 is an enlarged schematic diagram of an adapter element in the adapter panel provided in FIG. 9;
FIG. 11 is a schematic diagram of a structure of a closure according to an embodiment of this application;
FIG. 12 is a schematic diagram of removing a dust-proof cover in FIG. 11;
FIG. 13A is a schematic diagram of a structure of a second connection part according to an embodiment of this application;
FIG. 13B is a schematic diagram of a structure of a second connection part in another direction according to an embodiment of this application;
FIG. 13C is a schematic diagram of fitting between a second connection part and upper and lower molds at a circular step;
FIG. 13D is a schematic diagram of fitting between a second connection part and upper and lower molds at a circular step according to an embodiment of this application;
FIG. 14 is a schematic diagram of an exploded structure of a closure according to an embodiment of this application; and
FIG. 15 is an optical distribution network system formed by a plurality of closures according to an embodiment of this application.

Descriptions of reference numerals:
1-Box-type device; 2-Casing; 3-Adapter;
31-Adapter body; 32-Locking nut; 4-O-ring;
5-O-ring;
100-Closure; 110-Housing; 111-Casing;
1111-Engagement position; 112-Adapter panel; 1121-Fastening prism;
1122-Hook; 120-Adapter element; 121-First connection part;
1211-Engagement part; 12111-Gap; 122-Second connection part;
1221-First annular groove; 1222-Tangent plane; 1223-Boss
1224-Rotation buckle; 1225-Second annular groove; 1226-Circular step;
12241-Longitudinal groove; 12242-Arc-shaped groove;
123-Tube; 1231-Opening; 124-Fastening sleeve;
1241-Limiting structure; 125-Fastening bracket; 1251-Avoidance port;
126-Pull-out channel;
130-Dust-proof cover; 140-Second O-ring; 150-Fiber tray;
160-Optical splitter; 161-First connector;
170-First O-ring; 180-Second connector;
200-Mold; 201-Upper mold; 202-Lower mold.

### DESCRIPTION OF EMBODIMENTS

The terms used in the implementations of this application are merely used to explain the specific embodiments of this application, but are not intended to limit this application. The following describes the implementations of embodiments of this application in detail with reference to the accompanying drawings.

An OLT and an ONU are connection devices in an optical transport network, and are two necessary modules in a passive optical network (Passive Optical Network, PON). An ODN is a fiber to the home (Fiber to the Home, FTTH) optical cable network based on a PON device, and the ODN is used to provide an optical transport channel between the OLT and the ONU.

In an ODN project, a large quantity of box-type devices, for example, optical fiber distribution terminal boxes, optical distribution boxes, and optical fiber division boxes, are used, and different quantities of passive optical components of different types are integrated into these devices, to meet requirements of fiber deployment and management. Adapters are usually configured in these box-type devices, and two connectors are positioned in a sleeve in the adapter to implement an interconnection of two fibers.

The adapter has a high dimensional precision requirement, and therefore usually uses a polymer material with high dimensional stability and good weather resistance, but the box-type device usually has a casing with a relatively large volume, and has a lower dimensional precision requirement. Therefore, the box-type device is produced separately from the adapter in the market, and then the adapter is assembled onto the box-type device.

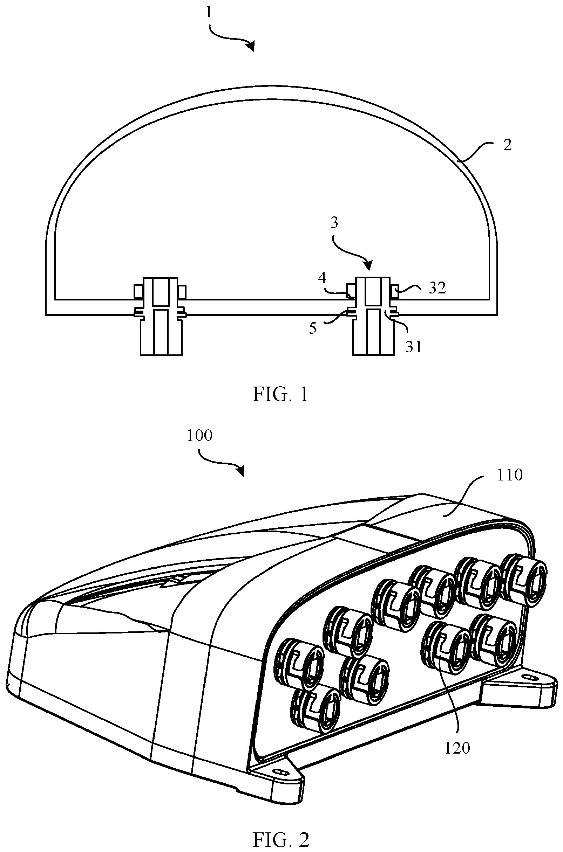

FIG. 1 is a schematic diagram of a box-type device used as a connection in a related technology. As shown in FIG. 1, the box-type device 1 includes a casing 2 and an adapter 3 assembled onto the casing 2. One end of the adapter 3 is located inside the casing 2, and is configured to connect to a connector in the casing, and the other end is located outside the casing 2, and is configured to connect to a connector outside the casing 2. The connector in the casing 2 and the connector outside the casing 2 implement an interconnection of two fibers by using the adapter 3.

The adapter 3 includes an adapter body 31 and a locking nut 32. After one end of the adapter body 31 passes through a through-hole in the casing 2 and is located inside the casing 2, the adapter body 31 is locked onto the casing 2 by using the locking nut 32, and an O-ring 4 and an O-ring 5 are disposed to separately seal junctions between the adapter body 31 and an inner side and an outer side of the casing 2.

However, the box-type device 1 used as a connection has several main problems.

First, the adapter 3 has a high dimensional precision requirement, and needs to be formed through injection molding by using a high-quality polymer material, and production and processing costs of the adapter 3 are relatively high.

Second, the adapter body 31 needs to be locked onto the casing 2 by using the locking nut 32 with specific torque, and the O-ring 4 and the O-ring 5 need to be used for sealing. The adapter body 31 has a relatively high assembling process requirement and relatively long assembling time.

Third, because mechanical sealing is performed between the adapter 3 and the casing 2 by using the O-rings, a quality risk exists in a specific scenario. For example, the locking nut 32 is not locked based on the torque, or the O-ring is not installed.

Fourth, the manner of locking the adapter body 31 onto the casing 2 by using the locking nut 32 may lead to reliability problems of stress cracking at a locking position, falling off the nut, and low sealing performance.

To resolve the foregoing problems, embodiments of this application provide a closure that is applicable to an ODN project and that is used as a connection device. The closure is integrally formed with a structure of an adapter element on a housing. One end of the adapter element may be connected to a first connector, and the other end may be connected to a second connector. The first connector and the second connector may implement a connection of two fibers by using the adapter element. The adapter element can replace an adapter, and no adapter needs to be separately assembled onto the housing, so that a product structure can be simplified, and material costs and assembling costs are greatly reduced. In addition, the closure can further avoid product reliability problems caused by assembling the adapter.

The following clearly describes the technical solutions in embodiments of this application with reference to the accompanying drawings in embodiments of this application. It is clear that the described embodiments are some but not all of embodiments of this application. All other embodiments obtained by persons skilled in the art based on embodiments of this application without creative efforts shall fall within the protection scope of this application.

It should be noted that the "box" mentioned in this application does not limit a shape or an appearance in embodiments of this application. The closure provided in embodiments of this application may be a box-type device such as an optical fiber distribution terminal box, an optical distribution box, or an optical fiber division box, or may be a product that is directly formed on any casing and that has a characteristic of an adapter element.

The following describes the closure by using the optical fiber division box as an example in embodiments of this application.

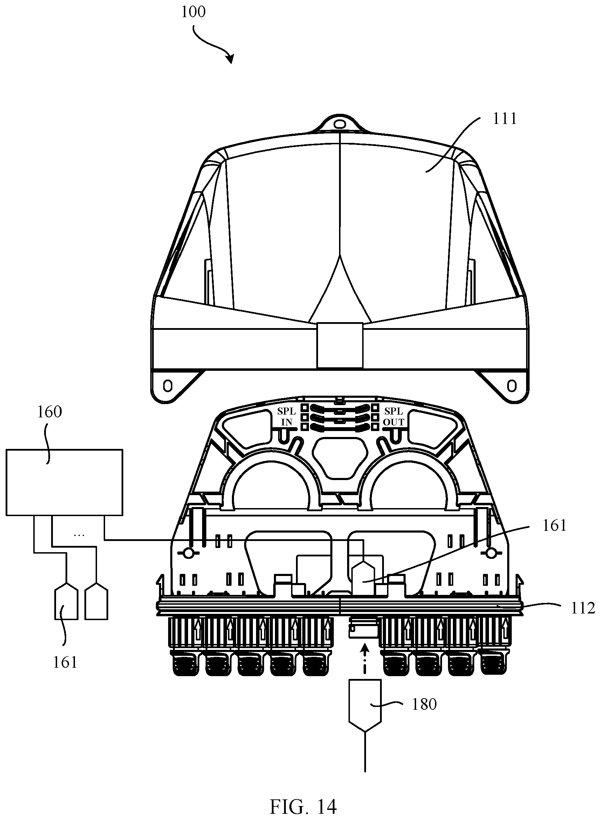

FIG. 2 is a schematic diagram of a structure of a closure 100 according to an embodiment of this application. As shown in FIG. 2, the closure 100 provided in this embodiment of this application includes a housing 110 and an adapter element 120 integrally formed with the housing 110. An end that is of the adapter element 120 and that is located inside the housing 110 may be connected to a first connector 161 (refer to FIG. 14), and an end that is of the adapter element 120 and that is located outside the housing 110 may be connected to a second connector 180 (refer to FIG. 14). The first connector 161 and the second connector 180 may implement an interconnection of two fibers by using the adapter element 120.

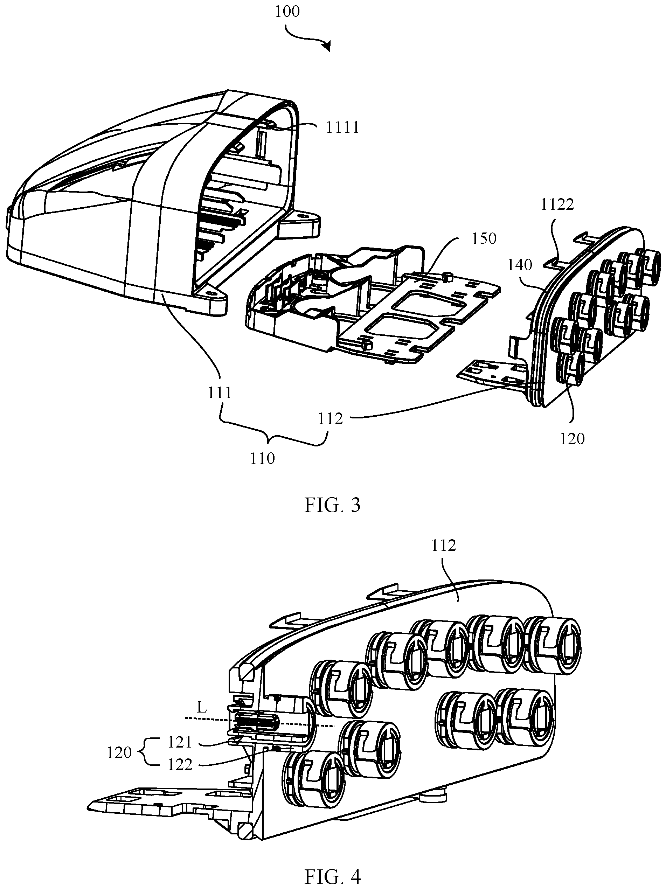

Specifically, FIG. 3 is a schematic diagram of an exploded structure of the closure 100 provided in FIG. 2. As shown in FIG. 3, to facilitate installation convenience of internal structures and components of the closure 100, the housing 110 may be divided into a casing 111 and an adapter panel 112. The casing 111 and the adapter panel 112 are assembled through a detachable connection. Inner surfaces of the casing 111 and the adapter panel 112 may form an accommodation cavity, and a structure and a function component that are necessary for the closure 100 may be assembled and configured in the accommodation cavity.

The adapter element 120 and the casing 111 may be of an integral structure, or the adapter element 120 and the adapter panel 112 may be of an integral structure. In this application, the adapter element 120 and the adapter panel 112 are of an integral structure for description.

It should be noted that in this application, "integrally formed" and "integral structure" refer to an entire structure formed through injection molding or stamping without connecting two or more components in an additional connection manner. In addition, if the closure 100 provided in this embodiment of this application does not need to be removed or assembled, the casing 111 and the adapter panel 112 may also be of an integral structure.

Specifically, FIG. 4 is a schematic diagram of a cross-sectional structure of the adapter panel 112 of the closure 100 provided in FIG. 3. As shown in FIG. 3 and FIG. 4, in this embodiment of this application, the adapter element 120 includes a first connection part 121 and a second connection part 122 that communicate with each other inside, and the first connection part 121, the second connection part 122, and the adapter panel 112 are of an integral structure. The first connection part 121 is located inside the housing 110, and is configured to connect to the first connector 161 disposed in the housing 110. The second connection part 122 is located outside the housing 110, and is configured to connect to the second connector 180 outside the housing 110. The first connector 161 and the second connector 180 implement an interconnection of two fibers by using a communicating region in the first connection part 121 and the second connection part 122 of the adapter element 120. For example, a ferrule of the first connector 161 and a ferrule of the second connector 180 are interconnected at the communicating region in the first connection part 121 and the second connection part 122 to complete the interconnection of the two fibers.

It should be understood that, according to the closure 100 provided in this embodiment of this application, the two fibers may be connected by using the adapter element 120 integrally formed with the housing 110, to form an entire optical distribution network, and no adapter needs to be separately assembled, so that a product structure can be simplified, and material costs and assembling costs can be greatly reduced. In addition, the closure 100 provided in this embodiment of this application is free from an adapter and O-rings at junctions between the adapter and an inner side and an outer side of the adapter panel 112, to avoid product reliability problems caused by assembling the adapter.

In addition, in comparison with an adapter that is separately produced and assembled and that uses a polymer material with a relatively high price due to a requirement for dimensional stability, in the closure 100 provided in this embodiment of this application, PPT plastic materials with lower prices may be used for the adapter element 120 and the housing 110 as an integral structure, so that material costs are further reduced. In comparison with a manner of separately producing and assembling the adapter onto a box-type device, overall costs of the closure 100 provided in this embodiment of this application are reduced by at least 25%.

The PPT plastic materials are materials based on polymer compounds, include rubber, plastic, fiber, an adhesive, and a polymer matrix composite material, and have easy-to-modify and easy-to-process characteristics. In addition to general mechanical performance, insulation performance, and thermal performance, the PPT plastic material has special functions of conversion, transfer, and storage of materials, energy, and information.

Further referring to FIG. 3, to implement a detachable connection between the casing 111 and the adapter panel 112, in an implementation of this application, the adapter panel 112 and the casing 111 are engaged through engagement of a hook 1122 and an engagement position 1111. For example, as shown in FIG. 3, the hook 1122 may be disposed on the adapter panel 112, and the engagement position 1111 to be engaged with the hook 1122 may be disposed on the casing 111, or in some examples, the hook 1122 may be disposed on the casing 111, and the engagement position 1111 to be engaged with the hook 1122 may be disposed on the adapter panel 112. In the accompanying drawings provided in this embodiment of this application, an example in which the hook 1122 is disposed on the adapter panel 112 and the engagement position 1111 is disposed on the casing 111 is used for description. Certainly, the detachable connection between the adapter panel 112 and the casing 111 may be alternatively a conventional connection manner such as buckling or bonding. The detachable connection manner between the adapter panel 112 and the casing 111 is not limited herein.

In addition, a second O-ring 140 may be further disposed between the casing 111 and the adapter panel 112. For example, as shown in FIG. 3, the second O-ring 140 may be disposed on a periphery of the adapter panel 112. When the casing 111 is connected to the adapter panel 112, the second O-ring 140 is used for sealing at a connection between the casing 111 and the adapter panel 112, so that the accommodation cavity formed by the adapter panel 112 and the casing 111 is a closed cavity body, to avoid dust accumulation in the accommodation cavity and damage to an element in the accommodation cavity that occur when impurities such as dust and water stains enter the accommodation cavity.

As shown in FIG. 3, the closure 100 provided in this embodiment of this application may further include a fiber tray 150, and the fiber tray 150 is disposed in the housing 110, and may be connected to the adapter panel 112 or the casing 111, to ensure stability of the fiber tray 150. The fiber tray 150 may be configured to fasten and protect a fiber connector. Because a tensile force, a bending force, and pressure impose great impact on installation and application of a fiber, the fiber tray 150 can provide safe cabling and easy-to-manage environments for the fragile fiber connector.

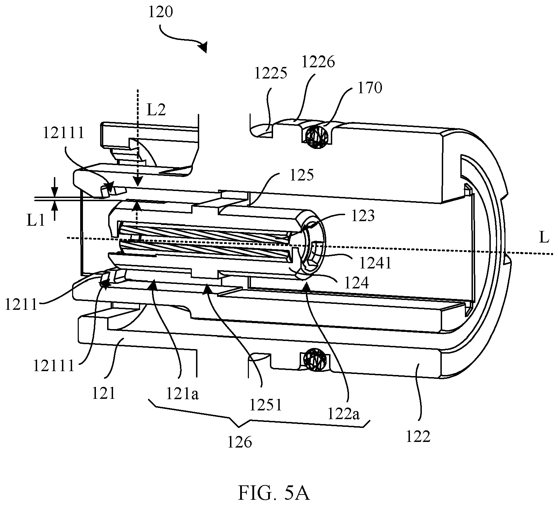

Certainly, this application is not limited thereto. FIG. 5A is an enlarged schematic diagram of a cross-sectional structure of the adapter element 120 in the adapter panel 112 provided in FIG. 4. As shown in FIG. 5A, in some embodiments of this application, an engagement part 1211 is disposed inside the first connection part 121, and correspondingly, a slot fitting with the engagement part 1211 is disposed on the first connector 161 connected to the first connection part 121. The first connector 161 and the first connection part 121 are plug-connected through engagement of the engagement part 1211 and the slot. For example, in this application, as shown in FIG. 5A, the engagement part 1211 may use a hook structure to implement plug-and-play of the first connector 161.

Further referring to FIG. 5A, in some embodiments of this application, the adapter element 120 may further include a tube 123 and a fastening sleeve 124. One end of the fastening sleeve 124 is located in the first connection part 121, the other end of the fastening sleeve 124 is located in the second connection part 122, and the tube 123 is disposed in the fastening sleeve 124. In this way, the ferrule of the first connector 161 and the ferrule of the second connector 180 can be accurately interconnected in the tube 123, and optical transmission stability of the ferrule of the first connector 161 and the ferrule of the second connector 180 in the tube 123 can be ensured. The tube 123 may be a ceramic tube 123.

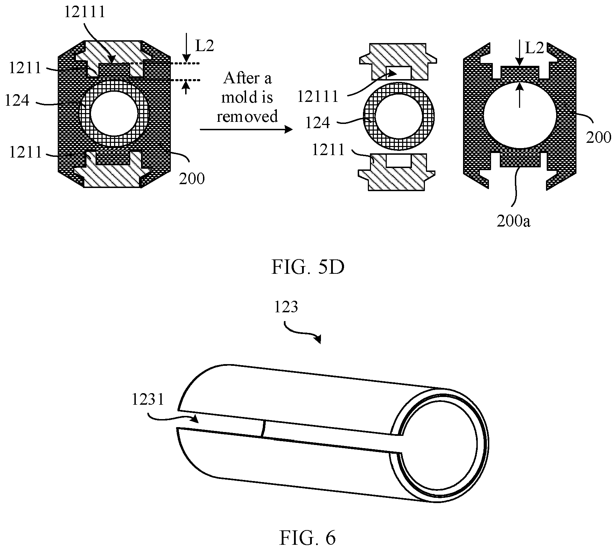

It should be mentioned that FIG. 6 is a schematic diagram of a structure of a tube 123 according to an embodiment of this application. As shown in FIG. 6, in this application, an opening 1231 may be disposed on the tube 123 in an axial direction of the tube 123, so that the tube 123 is of an open-loop annular structure, which may also be understood as a "C"-shaped tube structure. The "C"-shaped tube structure can provide specific elasticity for the tube 123, to adapt to a plurality of operating conditions in which diameters of the ferrule of the first connector 161 and the ferrule of the second connector 180 are inconsistent because of processes, models, and the like. Certainly, in another embodiment of this application, the tube 123 may be alternatively a closed-loop annular tube. A shape of the tube 123 is not limited herein.

Further referring to FIG. 5A, in some embodiments of this application, limiting structures 1241 for limiting the tube 123 may be further disposed at both ends of the fastening sleeve 124. For example, in FIG. 5A, protrusions may be disposed on inner walls of both ends of the fastening sleeve 124 as the limiting structures 1241 to limit displacement of the tube 123 in an axial direction of the fastening sleeve 124, thereby ensuring interconnection stability of the ferrule of the first connector 161 and the ferrule of the second connector 180 in the tube 123. For example, the protrusions may be disposed in a form of dots in FIG. 5A, or may be disposed in an annular arrangement form that is continuous along an inner wall of the fastening sleeve 124. Certainly, in another embodiment of this application, alternatively, the tube 123 may be directly fastened to the fastening sleeve 124 by using the limiting structure 1241.

Further referring to FIG. 5A, in some embodiments of this application, an outer edge of an end that is of the fastening sleeve 124 and that is located in the first connection part 121 may be misaligned with the engagement part 1211 in the axial direction of the fastening sleeve 124, in other words, a distance of L1 exists between the outer edge of the end that is of the fastening sleeve 124 and that is located in the first connection part 121 and the engagement part 1211 in a radial direction of the fastening sleeve 124, and a gap 12111 is provided on the engagement part 1211.

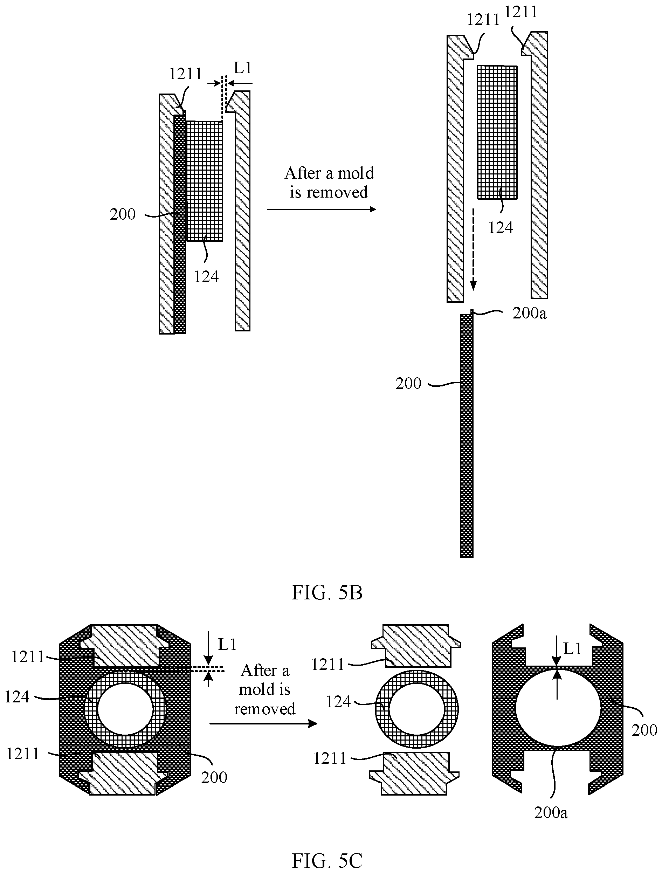

It should be understood that, in this application, the adapter element 120 and the casing 111 are integrally formed through injection molding. When the gap 12111 is not provided on the engagement part 1211, as shown in FIG. 5B, the distance L1 between one side that is of the engagement part 1211 and that is close to the fastening sleeve 124 and one side, of the end that is of the fastening sleeve 124 and that is located in the first connection part 121, close to the engagement part 1211 is relatively small. During injection molding, as shown in FIG. 5C, a width of a part 200a that is in a mold 200 and that is between the engagement part 1211 and the fastening sleeve 124 is L1. Because L1 is relatively small, the mold 200 is relatively thin at the part 200a, and therefore, a thin wall structure exists at the part 200a in the injection molding mold (in other words, a wall of the mold is relatively thin at the part 200a). When the wall of the mold is relatively thin at the part, product molding and a service life of the mold are seriously affected.

To resolve the foregoing problems, in this embodiment of this application, the gap 12111 is added to the engagement part 1211. As shown in FIG. 5D, a distance L2 between the outer edge of the fastening sleeve 124 and the engagement part 1211 at the gap 12111 (namely, a distance in a direction perpendicular to the axial direction of the fastening sleeve 124) increases. In this way, a wall thickness of the part 200a in the mold 200 at the gap 12111 increases to L2. Because L1 is less than L2, a wall thickness of the mold 200 at the part 200a increases, so that a product can be successfully molded, and a service life of the mold can be prolonged.

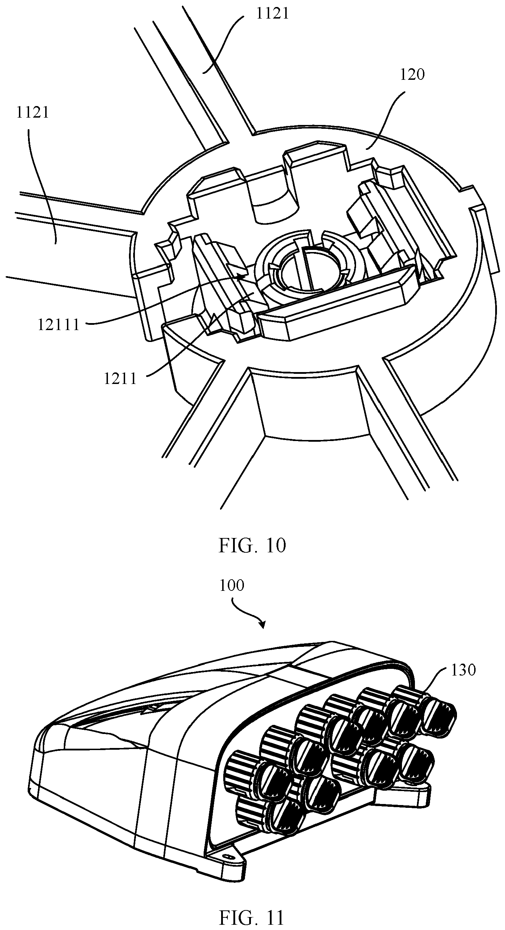

It should be noted that, in this embodiment of this application, a shape of the gap 12111 may be a square gap (as shown in the following FIG. 10), or in some examples, the gap 12111 may be a semi-circular gap, or may be a gap of another shape. In addition, a position of the gap 12111 on the engagement part 1211 may be adjusted based on the distance between the outer edge of the fastening sleeve 124 and the engagement part 1211. For example, in FIG. 5D, the gap 12111 may extend in leftward and rightward directions of the engagement part 1211, so that a minimum distance between the outer edge of the fastening sleeve 124 and the engagement part 1211 increases, and a minimum thickness of the corresponding part 200a in the mold 200 increases. In this way, a problem of a reduction in the service life caused by a thin wall structure occurring in a part of the mold 200 is avoided.

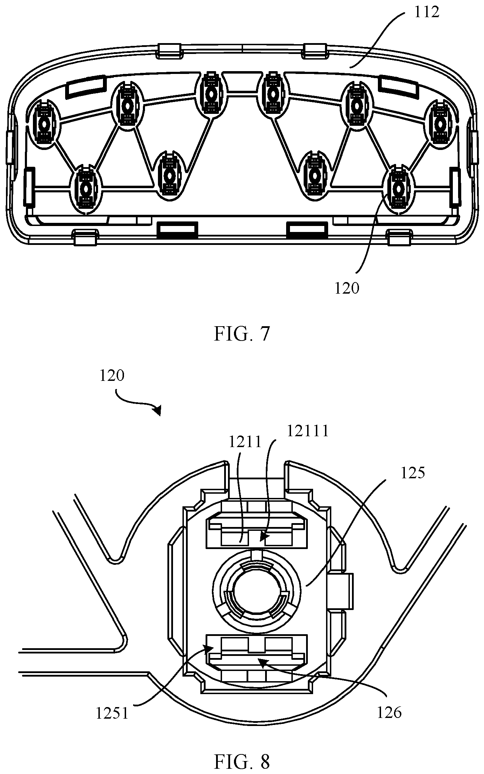

FIG. 7 is a perspective view of an adapter panel 112 of a closure 100 according to an embodiment of this application. FIG. 8 is an enlarged schematic diagram of an adapter element 120 in the adapter panel 112 provided in FIG. 7. As shown in FIG. 5A and FIG. 8, in some embodiments of this application, a fastening bracket 125 is disposed in the adapter element 120, and the fastening sleeve 124 is fastened in the adapter element 120 by using the fastening bracket 125. For example, the fastening bracket 125 fastens the fastening sleeve 124 to an inner wall of the communicating region in the first connection part 121 and the second connection part 122 of the adapter element 120.

In conclusion, the adapter element includes the fastening sleeve, the fastening bracket, the first connection part, and the second connection part, and all of the fastening sleeve, the fastening bracket, the first connection part, the second connection part, and the adapter panel are of an integral structure.

As shown in FIG. 5A, an avoidance port 1251 is disposed on the fastening bracket 125 at a position opposite to each engagement part 1211, and an area of an opening 1231 of the avoidance port 1251 needs to be greater than an orthographic projection area (as shown in FIG. 8) of the engagement part 1211 on the fastening bracket 125. The avoidance port 1251 is separately connected to an inside 121a of the first connection part 121 and an inside 122a of the second connection part 122, so that a pull-out channel 126 is formed inside the adapter element 120. If viewed from an axial direction of the adapter element 120, a complete engagement part 1211 can be viewed in the pull-out channel 126 (as shown in FIG. 8). The pull-out channel 126 may be used as a channel through which a mold is removed when the engagement part 1211 is molded. When being removed, the mold exits the second connection part 122. Without the pull-out channel, structural molding of the engagement part 1211 becomes quite complex, or the engagement part 1211 cannot be integrally formed with the housing 110.

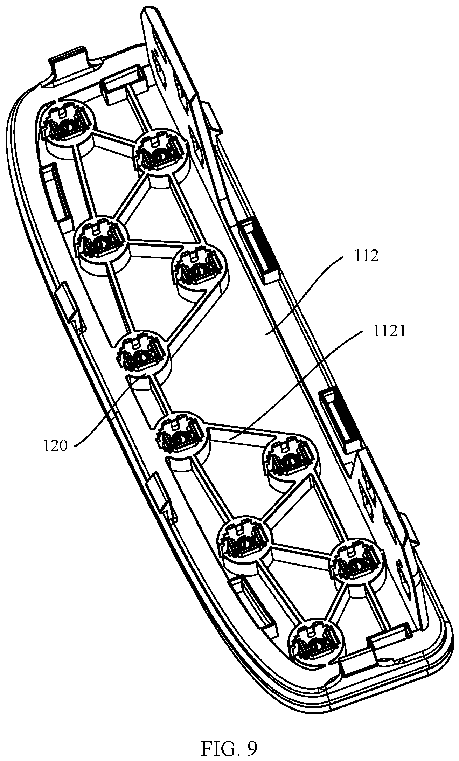

FIG. 9 is a perspective view of an adapter panel 112 of a closure 100 according to an embodiment of this application. FIG. 10 is an enlarged schematic diagram of an adapter element 120 in the adapter panel 112 provided in FIG. 9. As shown in FIG. 9 and FIG. 10, in some embodiments of this application, a fastening prism 1121 may be further disposed on the adapter panel 112. The fastening prism 1121 is connected between two adapter elements 120 or is connected between the adapter element 120 and an inner sidewall of the adapter panel 112, so that the adapter element 120 can be kept at a fixed position, thereby ensuring structural stability of the closure 100.

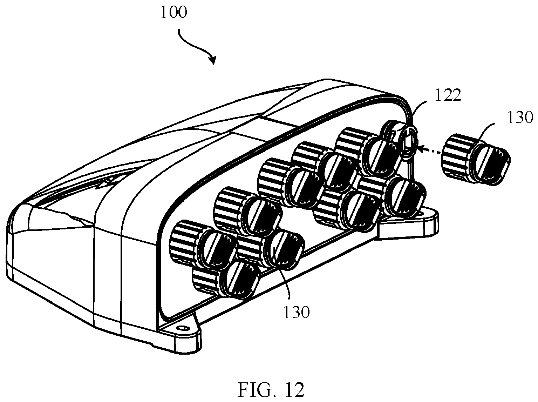

FIG. 11 is a schematic diagram of a structure of a closure 100 according to an embodiment of this application. FIG. 12 is a schematic diagram of removing a dust-proof cover 130 in FIG. 11. As shown in FIG. 11 and FIG. 12, the closure 100 provided in this embodiment of this application may further include the dust-proof cover 130. The dust-proof cover 130 is configured to be detachably disposed on the second connection part 122 when the second connection part 122 is not connected to the second connector 180. When the closure 100 is not in use, the dust-proof cover 130 can avoid dust accumulation and damage to an element in the closure 100 that occur when impurities such as dust and liquid enter the closure 100.

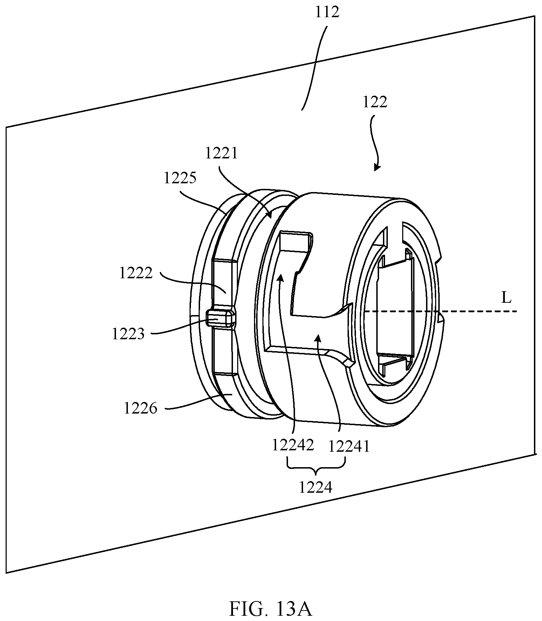

As shown in FIG. 13A and FIG. 5A, a second annular groove 1225 is provided on an end that is of the second connection part 122 and that is close to the housing 110, so that when the second connection part 122 is connected to the second connector 180 (refer to FIG. 14), the dust-proof cover 130 is hung on the second annular groove 1225. For example, a hook or a wire may be disposed on the dust-proof cover 130. In this way, the dust-proof cover 130 can be hung on the second annular groove 1225 by using the hook or the wire, so that the dust-proof cover 130 is not easily lost.

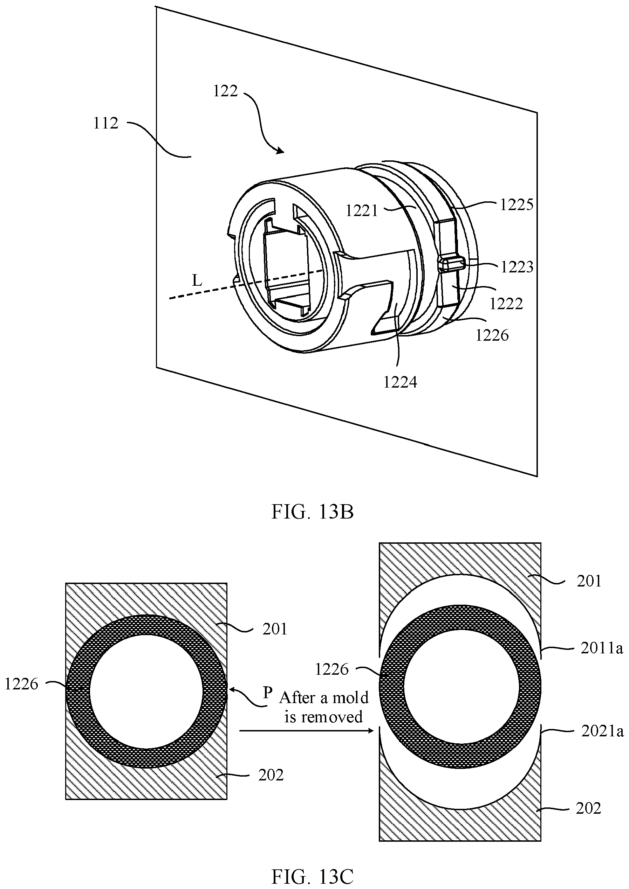

As shown in FIG. 13A, a circular step 1226 exists between a first annular groove 1221 and the second annular groove 1225, and two tangent planes 1222 that are axially symmetrical with respect to a center axis L of the second connection part 122 are disposed on an outer peripheral surface of the circular step 1226. For example, in FIG. 13A and FIG. 13B, the two tangent planes 1222 are horizontally symmetrical with respect to the center axis L of the second connection part 122 on the second connection part 122.

It should be noted that, in this embodiment of this application, if the tangent planes 1222 are not disposed on the circular step 1226, during injection molding, as shown in FIG. 13C, an upper mold 201 and a lower mold 202 are vertically interconnected. When the upper mold 201 and the lower mold 202 are interconnected at the circular step 1226 of the second connection part 122, the upper mold 201 and the lower mold 202 are tangent to the outer peripheral surface of the circular step 1226 at a position P. After the mold is removed, it can be seen that an end 2011a of the upper mold 201 and an end 2021a of the lower mold 202 fit tip by tip. Therefore, in a use process, the end 2011a of the upper mold 201 and the end 2021a of the lower mold 202 are easily deformed or damaged due to relatively small thicknesses, and this is unhelpful for removing the mold.

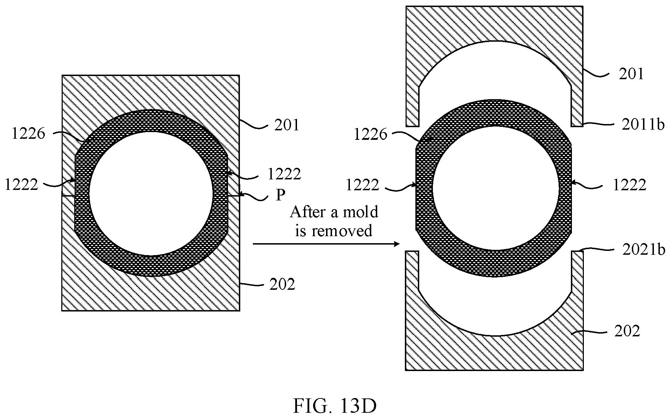

To resolve the foregoing problems, in this embodiment of this application, the tangent planes 1222 are disposed. In this case, when the second connection part 122 is molded, as shown in FIG. 13D, an end 2011b of the upper mold 201 and an end 2021b of the lower mold 202 are changed from tip-to-tip fitting to face-to-face fitting, and thicknesses of the end 2011b of the upper mold 201 and the end 2021b of the lower mold 202 are relatively large. Therefore, in a use process, the end 2011b of the upper mold 201 and the end 2021b of the lower mold 202 are not easily deformed or damaged, to facilitate mold removal after injection molding, thereby ensuring that the second connection part 122 is integrally formed at the circular step 1226.

FIG. 13A is a schematic diagram of a structure of a second connection part 122 according to an embodiment of this application. As shown in FIG. 4 and FIG. 13A, the second connection part 122 is disposed on the adapter panel 112 and is located outside the closure 100. In this application, the first annular groove 1221 may be provided on an outer peripheral wall of the second connection part 122, and the first annular groove 1221 is adapted to configure a first O-ring 170 (refer to FIG. 5A). When the dust-proof cover 130 or the second connector 180 is connected to the second connection part 122, the first O-ring 170 can avoid damage to an element in the closure 100 that occurs when an impurity such as liquid enters the closure 100 from a gap between the outer peripheral wall of the second connection part 122 and the dust-proof cover 130 or an inner wall of a sleeve of the second connector 180.

Further referring to FIG. 13A, when the tangent plane 1222 is disposed near the first annular groove 1221, because a height of the tangent plane 1222 in a groove depth direction of the first annular groove 1221 is less than that of an outer peripheral surface of the second connection part 122, when the first O-ring 170 is disposed in the first annular groove 1221 and the dust-proof cover 130 or the second connector 180 is plug-connected to the second connection part 122, the dust-proof cover 130 or the second connector 180 squeezes the first O-ring 170, and the first O-ring 170 is easily extruded to the tangent plane 1222, affecting sealing between the dust-proof cover 130 or the second connector 180 and the second connection part 122.

Therefore, in this embodiment of this application, a boss 1223 is disposed on the tangent plane 1222. When the dust-proof cover 130 or the second connector 180 is connected to the second connection part 122, the boss 1223 can prevent the dust-proof cover 130 or the second connector 180 from extruding the first O-ring 170 out of the first annular groove 1221 from the tangent plane 1222. For example, as shown in FIG. 13A and FIG. 14, when the second connector 180 is plug-connected to the second connection part 122, the boss 1223 stops the first O-ring 170 to avoid a sealing failure between the second connector 180 and the second connection part 122 that occurs when the first O-ring 170 is separated from the first annular groove 1221 at the tangent plane 1222 through squeezing of the second connector 180. In addition, when the boss 1223 is disposed on the tangent plane 1222, after injection molding is completed, the boss 1223 can further reduce a difficulty of the mold, so that the mold is easy to remove.

It should be noted that, in this embodiment of this application, a top end of the boss 1223 is not higher than the outer peripheral surface of the second connection part 122, for example, a surface of the top end of the boss 1223 and the outer peripheral surface of the second connection part 122 may be located on a circumference of a same circle, or the top end of the boss 1223 is lower than the outer peripheral surface of the second connection part 122.

In addition, in some embodiments of this application, an engagement structure may be further disposed on the second connection part 122, so that the dust-proof cover 130 or the second connector 180 is detachably connected to the second connection part 122. For example, as shown in FIG. 13A, a rotation buckle 1224 may be disposed on the outer peripheral wall of the second connection part 122. Correspondingly, protrusions (not shown in the figure) fitting with the rotation buckle 1224 are disposed on the dust-proof cover 130 and the second connector 180. The second connection part 122 is engaged with the dust-proof cover 130 or the second connector 180 through fitting of the rotation buckle 1224 with the protrusion.

Specifically, as shown in FIG. 13A, the rotation buckle 1224 includes a longitudinal groove 12241 and an arc-shaped groove 12242, one end of the longitudinal groove 12241 is connected to an outer end face of the second connection part 122, and the other end of the longitudinal groove 12241 is connected to the arc-shaped groove 12242. In this way, the longitudinal groove 12241 provides an entry through which the protrusions disposed on the dust-proof cover 130 and the second connector 180 are snapped. The arc-shaped groove 12242 is disposed along a circumference of the outer peripheral wall of the second connection part 122, so that the longitudinal groove 12241 and the arc-shaped groove 12242 constitute an "L"-shaped groove. In this way, the arc-shaped groove 12242 provides a groove for engagement of the protrusions on the dust-proof cover 130 and the second connector 180.

When the dust-proof cover 130 or the second connector 180 is engaged with the second connection part 122, a protrusion on the dust-proof cover 130 or the second connector 180 enters the longitudinal groove 12241 from the outer end face of the second connection part 122, and then the dust-proof cover 130 or the second connector 180 is rotated, so that the protrusion enters the arc-shaped groove 12242 from the longitudinal groove 12241, thereby implementing engagement of the dust-proof cover 130 or the second connector 180 and the second connection part 122 and preventing the dust-proof cover 130 or the second connector 180 from falling off from the housing 110.

FIG. 14 is a schematic diagram of an exploded structure of a closure 100 according to an embodiment of this application. As shown in FIG. 14, in some embodiments of this application, the closure 100 further includes an optical splitter 160 disposed in the housing 110. The optical splitter 160 is a fiber junction component with a plurality of input ends and a plurality of output ends, and may be used for optical signal coupling, branching, and distribution. Terminals of the input end and the output end of the optical splitter 160 have first connectors 161, and the first connector 161 is connected to the first connection part 121 of the adapter element 120 as an optical splitter connector.

The first connector 161 may be an LC connector (Lucent Connector), an SC connector (Square Connector), an FC connector (Ferrule Connector), an MPO connector (Multi-fiber Pull Off), or the like. Herein, a model of the first connector 161 connected to the first connection part 121 and a model of the second connector 180 connected to the second connection part 122 are not limited. Certainly, the first connector 161 and the second connector 180 may be alternatively components with a characteristic of a connector.

It should be noted that the accompanying drawings in this application are not drawn according to an actual proportion of parts. Therefore, this application should not be limited to the proportion shown in the accompanying drawings. In addition, in FIG. 14, for ease of understanding, the optical splitter 160 is disposed on one side of the fiber tray 150. In an actual product, the optical splitter is configured in the housing 110, for example, may be disposed above the fiber tray 150.

The closure 100 provided in this application usually includes a plurality of adapter elements 120. However, a quantity of adapter elements 120 is set based on a specific operating condition. For example, there may be one, two, or more adapter elements 120. The quantity of adapter elements 120 on the closure 100 is not limited herein.

When there are a plurality of adapter elements 120 on the closure 100, second connection parts 122 of some of the plurality of adapter elements 120 may be input interfaces, and second connection parts 122 of some of the plurality of adapter elements 120 may be output interfaces. An optical distribution network (ODN) system may be formed by using the closure 100.

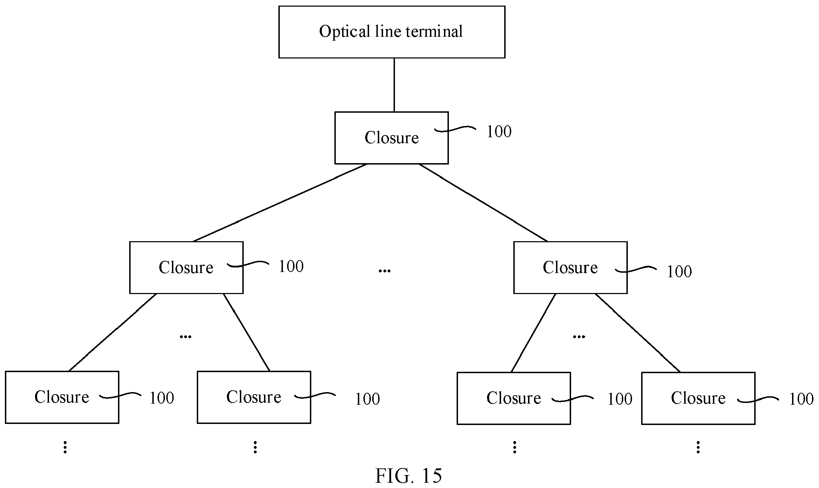

FIG. 15 is an optical distribution network system formed by a plurality of closures 100 according to an embodiment of this application. For example, as shown in FIG. 15, an optical bus is led out from an optical line terminal (OLT), and is connected to the closure 100 by using the second connection part 122 of the closure 100, the optical splitter 160 in the closure 100 performs optical splitting, then the optical bus is led out by using another second connection part 122 and transferred to a next-level closure 100, and so on.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

In the descriptions of embodiments of this application, it should be noted that, unless otherwise specified and limited, the terms "install", "connect to each other", and "connect" should be understood in a broad sense. For example, the term may mean fastening, may be an indirect connection by using an intermediate medium, or may be a connection between two elements or an interaction relationship between two elements. Persons of ordinary skill in the art can understand specific meanings of the foregoing terms in embodiments of this application based on a specific situation.

In the descriptions of embodiments of this application, "a plurality of" means two or more, unless otherwise specifically specified.

In the specification, claims, and accompanying drawings of embodiments of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of this application described herein can be implemented in orders except the order illustrated or described herein. In addition, terms such as "include", "have", and any variations thereof are intended to cover non-exclusive inclusions, for example, a process, method, system, product, or device that includes a series of steps or units is not necessarily limited to those clearly listed steps or units, but may include other steps or units that are not clearly listed or inherent to such a process, method, product, or device.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of the present invention.

## Claims

1. A closure, comprising:
a housing and an adapter element, wherein the adapter element comprises a tube and a first connection part and a second connection part that communicate with each other inside, the first connection part is located inside the housing, the second connection part is located outside the housing, one end of the tube is located in the first connection part, and the other end of the tube is located in the second connection part;
the first connection part is configured to connect to a first connector disposed in the housing, and the second connection part is configured to connect to a second connector outside the housing; and
the housing, the first connection part, and the second connection part are of an integral structure as a whole.

2. The closure according to claim 1, wherein an engagement part is disposed inside the first connection part, a slot fitting with the engagement part is disposed on the first connector, and the first connector and the first connection part are plug-connected through engagement of the engagement part and the slot.

3. The closure according to claim 2, wherein the adapter element further comprises a fastening sleeve, one end of the fastening sleeve is located in the first connection part, and the other end of the fastening sleeve is located in the second connection part; and
the tube is disposed in the fastening sleeve, and limiting structures for limiting the tube are disposed at both ends of the fastening sleeve.

4. The closure according to claim 3, wherein an outer edge of an end that is of the fastening sleeve and that is located in the first connection part is misaligned with the engagement part in an axial direction of the fastening sleeve; and
a gap is provided on the engagement part.

5. The closure according to claim 3 or 4, wherein a fastening bracket is disposed in the adapter element, and the fastening sleeve is fastened in the adapter element by using the fastening bracket;
an avoidance port is disposed on the fastening bracket at a position opposite to each engagement part, and an area of an opening of the avoidance port is greater than an orthographic projection area of the engagement part on the fastening bracket; and
the avoidance port is separately connected to an inside of the first connection part and an inside of the second connection part, so that a pull-out channel is formed inside the adapter element.

6. The closure according to any one of claims 1 to 5, wherein a first annular groove is provided on an outer peripheral wall of the second connection part, and a first O-ring is disposed in the first annular groove; and
a tangent plane is disposed on the outer peripheral wall of the second connection part on a side that is of the first annular groove and that is close to the housing.

7. The closure according to claim 6, wherein a boss is disposed on the tangent plane.

8. The closure according to claim 6 or 7, wherein the closure further comprises a dust-proof cover, and the dust-proof cover is configured to be detachably disposed on the second connection part when the second connection part is not connected to the second connector;
a second annular groove is provided on an end that is of the second connection part and that is close to the housing, so that the dust-proof cover is hung on the second annular groove when the second connection part is connected to the second connector; and
a circular step exists between the first annular groove and the second annular groove, and two tangent planes that are axially symmetrical with respect to a center axis of the second connection part are disposed on an outer peripheral surface of the circular step.

9. The closure according to any one of claims 3 to 5, wherein the tube is a ceramic tube, and an opening is opened on the tube in an axial direction of the tube, so that the tube is of an open-loop annular structure.

10. The closure according to any one of claims 1 to 9, wherein the housing comprises a casing and an adapter panel, the casing is connected to the adapter panel, and inner surfaces of the casing and the adapter panel form an accommodation cavity; and
the first connection part, the second connection part, and the casing are of an integral structure; or
the first connection part, the second connection part, and the adapter panel are of an integral structure.

11. The closure according to claim 10, wherein a second O-ring is disposed between the casing and the adapter panel; and
the second O-ring is configured to seal a connection between the casing and the adapter panel, so that the accommodation cavity is a closed cavity body.

12. The closure according to claim 10 or 11, wherein a hook is disposed on the adapter panel, an engagement position to be engaged with the hook is disposed on the casing, and the casing and the adapter panel are engaged through engagement of the hook and the engagement position.

13. The closure according to any one of claims 1 to 12, wherein a rotation buckle is disposed on the outer peripheral wall of the second connection part, and protrusions fitting with the rotation buckle are disposed on the second connector; and
the second connection part is engaged with the second connector through fitting of the rotation buckle with the protrusion.

14. The closure according to claim 13, wherein the rotation buckle comprises a longitudinal groove and an arc-shaped groove, one end of the longitudinal groove is connected to an outer end face of the second connection part, the other end of the longitudinal groove is connected to the arc-shaped groove, and the arc-shaped groove is disposed along a circumference of the outer peripheral wall of the second connection part, so that the longitudinal groove and the arc-shaped groove constitute an "L"-shaped groove.

15. The closure according to any one of claims 1 to 14, further comprising: an optical splitter disposed in the housing, wherein
the optical splitter is connected to the first connection part by using the first connector; and
further comprising: a fiber tray, wherein the fiber tray is located in the housing.

16. The closure according to any one of claims 1 to 15, wherein there are a plurality of adapter elements, second connection parts of some of the plurality of adapter elements are input interfaces, and second connection parts of some of the plurality of adapter elements are output interfaces.

## Amended claims

### Amended claims under Art. 19.1 PCT

1. A closure, comprising:
a housing and an adapter element, wherein the adapter element comprises a tube and a first connection part and a second connection part that communicate with each other inside, the first connection part is located inside the housing, the second connection part is located outside the housing, one end of the tube is located in the first connection part, and the other end of the tube is located in the second connection part;
the first connection part is configured to connect to a first connector disposed in the housing, and the second connection part is configured to connect to a second connector outside the housing; and
the housing, the first connection part, and the second connection part are of an integral structure as a whole.

2. The closure according to claim 1, wherein an engagement part is disposed inside the first connection part, a slot fitting with the engagement part is disposed on the first connector, and the first connector and the first connection part are plug-connected through engagement of the engagement part and the slot.

3. The closure according to claim 2, wherein the adapter element further comprises a fastening sleeve, one end of the fastening sleeve is located in the first connection part, and the other end of the fastening sleeve is located in the second connection part; and
the tube is disposed in the fastening sleeve, and limiting structures for limiting the tube are disposed at both ends of the fastening sleeve.

4. The closure according to claim 3, wherein an outer edge of an end that is of the fastening sleeve and that is located in the first connection part is misaligned with the engagement part in an axial direction of the fastening sleeve; and
a gap is provided on the engagement part.

5. The closure according to claim 3 or 4, wherein a fastening bracket is disposed in the adapter element, and the fastening sleeve is fastened in the adapter element by using the fastening bracket;
an avoidance port is disposed on the fastening bracket at a position opposite to each engagement part, and an area of an opening of the avoidance port is greater than an orthographic projection area of the engagement part on the fastening bracket; and
the avoidance port is separately connected to an inside of the first connection part and an inside of the second connection part, so that a pull-out channel is formed inside the adapter element.

6. The closure according to any one of claims 1 to 5, wherein a first annular groove is provided on an outer peripheral wall of the second connection part, and a first O-ring is disposed in the first annular groove; and
a tangent plane is disposed on the outer peripheral wall of the second connection part on a side that is of the first annular groove and that is close to the housing.

7. The closure according to claim 6, wherein a boss is disposed on the tangent plane.

8. The closure according to claim 6 or 7, wherein the closure further comprises a dust-proof cover, and the dust-proof cover is configured to be detachably disposed on the second connection part when the second connection part is not connected to the second connector;
a second annular groove is provided on an end that is of the second connection part and that is close to the housing, so that the dust-proof cover is hung on the second annular groove when the second connection part is connected to the second connector; and
a circular step exists between the first annular groove and the second annular groove, and two tangent planes that are axially symmetrical with respect to a center axis of the second connection part are disposed on an outer peripheral surface of the circular step.

9. The closure according to any one of claims 3 to 5, wherein the tube is a ceramic tube, and an opening is opened on the tube in an axial direction of the tube, so that the tube is of an open-loop annular structure.

10. The closure according to any one of claims 1 to 9, wherein the housing comprises a casing and an adapter panel, the casing is connected to the adapter panel, and inner surfaces of the casing and the adapter panel form an accommodation cavity; and
the first connection part, the second connection part, and the casing are of an integral structure; or
the first connection part, the second connection part, and the adapter panel are of an integral structure.

11. The closure according to claim 10, wherein a second O-ring is disposed between the casing and the adapter panel; and
the second O-ring is configured to seal a connection between the casing and the adapter panel, so that the accommodation cavity is a closed cavity body.

12. The closure according to claim 10 or 11, wherein a hook is disposed on the adapter panel, an engagement position to be engaged with the hook is disposed on the casing, and the casing and the adapter panel are engaged through engagement of the hook and the engagement position.

13. The closure according to any one of claims 1 to 12, wherein a rotation buckle is disposed on the outer peripheral wall of the second connection part, and protrusions fitting with the rotation buckle are disposed on the second connector; and
the second connection part is engaged with the second connector through fitting of the rotation buckle with the protrusion.

14. The closure according to claim 13, wherein the rotation buckle comprises a longitudinal groove and an arc-shaped groove, one end of the longitudinal groove is connected to an outer end face of the second connection part, the other end of the longitudinal groove is connected to the arc-shaped groove, and the arc-shaped groove is disposed along a circumference of the outer peripheral wall of the second connection part, so that the longitudinal groove and the arc-shaped groove constitute an "L"-shaped groove.

15. The closure according to any one of claims 1 to 14, further comprising: an optical splitter disposed in the housing, wherein
the optical splitter is connected to the first connection part by using the first connector; and
further comprising: a fiber tray, wherein the fiber tray is located in the housing.

16. The closure according to any one of claims 1 to 15, wherein there are a plurality of adapter elements, second connection parts of some of the plurality of adapter elements are input interfaces, and second connection parts of some of the plurality of adapter elements are output interfaces.

17. A closure assembly, comprising the closure according to any one of claims 1 to 16 and a second connector, wherein the second connector is connected to a second connection parts on the housing of the closure.
